# EUROPEAN PATENT SPECIFICATION

(11) **EP 0 880 888 B1**
(45) Date of publication and mention of the grant of the patent: **04.09.2002**
(21) Application number: 98201646.1
(22) Date of filing: 18.05.1998
(51) Int. Cl.: A01J 5/017

(54) **An implement for automatically milking animals**
Vorrichtung zum automatischen Melken von Tieren
Dispositif de traite automatique d'animaux

(30) Priority: 30.05.1997 NL 1006171
(43) Date of publication of application: 02.12.1998
(60) Divisional application: 02075593.0
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- EP-A- 0 258 938
- EP-A- 0 541 517
- EP-A- 0 717 926
- WO-A-90/07268
- WO-A-93/13651
- WO-A-96/01041
- US-A- 4 726 322

## Description

The invention relates to an implement for automatically milking animals, such as cows, as described in the preamble of claim 1.

Such an implement is known from EP-A-0 717 926.

It is an object of the invention to improve such an implement.

In accordance with the invention, this is achieved by the features as defined in claim 1. According to an inventive feature, near each longitudinal side of the milk box two robot arms are arranged one behind the other. According to another inventive feature, the operating means comprise hingeable constructions which are preferably capable of being post-controlled by a computer. According to a further inventive feature, the first plane, in which the first hingeable construction is located, encloses an angle of approximately 90° with the second plane, in which the second and third hingeable constructions are located. In accordance with a preferred embodiment of the invention, the first plane, in which the first parallelogram construction is located, encloses an angle of approximately 90° with the second plane, in which the second and third parallelogram constructions are located. By means of the first parallelogram construction it is possible to follow the movements of the animal in the longitudinal direction of the milk box, while, by means of the second and third parallelogram constructions, movements both in the upward and sideward direction of the milk box can be followed.

According to a further inventive feature, to the third parallelogram construction there is fitted a teat cup carrier bearing a teat cup at its end. According to another inventive feature, the teat cup carrier comprises a first portion extending approximately transversely to the longitudinal direction of the milk box and a second portion which is contiguous to the first one and extends obliquely rearwards and inwards. The obliquely rearwardly extending portion makes it possible to dispose the first portion closer to the front side of the milk box, so that there is created space for the animal's hind legs. In a preferred embodiment of the invention, the first and second portions of the teat cup carrier enclose an angle of approximately 45° with each other.

In accordance with another aspect of the invention, the teat cup carrier is hollow and the milk tube and/or the pulsation tube of the relevant teat cup are/is located in the cavities of the teat cup carrier. In this manner the tubes and any electric wires leading to sensors in the teat cup are protected by the teat cup carrier and do not form an obstacle for e.g. the animal's legs.

According to the invention, for the purpose of controlling the parallelogram constructions, the latter are provided with computer-controlled operating means. According to an inventive feature, the operating means may comprise stepper motors and/or servo-pneumatic or hydraulic cylinders.

In order to give the teat cup carriers more freedom on the bottom, according to a further inventive feature, the teat cup carriers are fitted to the third parallelogram construction so as to extend obliquely downwards. For the purpose of milking small animals, such as goats or sheep, by means of the implement for automatically milking animals, the teat cups have a length of approximately 12 cm.

For determining the position of the teats of the animal to be milked, according to an inventive feature, the implement comprises a detector, such as a laser. For the purpose of determining the position of all four teats, on both sides of the milk box there is disposed a detector. The detectors are preferably fitted to the frame of the milk box.

In accordance with a further aspect of the invention, the implement comprises animal-following means with the aid of which the position of the animal, or at least a part of the animal, relative to the milk box can be determined, while, on the basis of this position, using a computer, both during and after connection of the teat cups to the teats, the parallelogram constructions are post-controlled in order that the teat cups continue to follow the movements of the animal in the milk box. According to a further inventive feature, the animal-following means comprise mechanical sensors pushing against the flanks of the animal and against the rear side of the animal when the latter is present in the milk box. According to a further inventive feature, when the animal is present in the milk box, one mechanical sensor is located against each flank of the animal and two mechanical sensors are located against its rear side. According to again another inventive feature, the mechanical sensors comprise a hingeable arm construction which is provided at its end with a stop that is rotatably disposed about an axis, which stop rests against the animal when the latter is present in the milk box.

In accordance with a further inventive feature, the animal-following means comprise registration means converting a change in position of the animal-following means into an electronic signal that can be used to post-control the parallelogram constructions. In a preferred embodiment of the invention, the registration means are connected with a hinge axis of the mechanical sensors. According to an aspect of the invention, the registration means may comprise computer-controlled stepper motors. This makes it possible to bring the animal-following means into such a position that, when an animal enters or leaves the milk box, said animal-following means do not form an obstacle for the animal. Furthermore it is possible to push the animal-following means by a predetermined force against the animal when the latter has entered the milk box.

According to an inventive feature, the implement comprises four teat cups and each of the teat cups is connected with a milk collecting element for temporary collection of the milk yielded by the/a relevant teat cup.

According to a further inventive feature, the milk collecting elements comprise milk quality sensors, such as conductivity sensors, sensors for determining the fat-protein-content, etc. By means of the milk quality sensors the quality of the milk of each of the udder quarters can be determined. According to a further inventive feature, the milk collecting elements are disposed near the rear side of the milk box.

For a better understanding of the invention, reference will now be made to the accompanying drawings, in which:
Figure 1 is a side view of the implement for automatically milking animals, such as cows or goats;
Figure 2 is a plan view of the implement for automatically milking animals shown in Figure 1;
Figure 3 is a rear view of the implement shown in Figures 1 and 2;
Figure 4 shows a detail of the robot arm in a situation in which the robot arm has pivoted into the inoperative position;
Figure 5 is a rear view of a second embodiment of the implement for automatically milking animals, provided with relatively short teat cups enabling to milk small animals, such as sheep or goats, by means of the implement, and
Figure 6 is a rear view of a third embodiment of an implement for automatically milking animals, the teat cup carriers extending obliquely downwards.

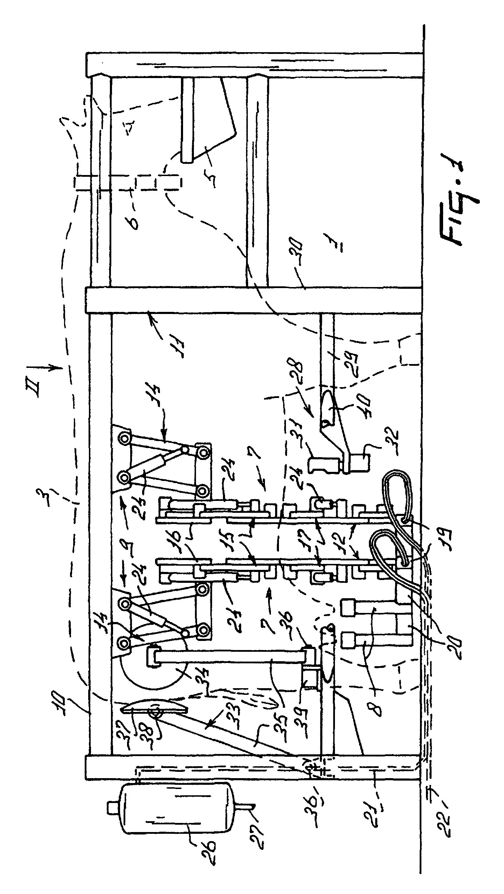

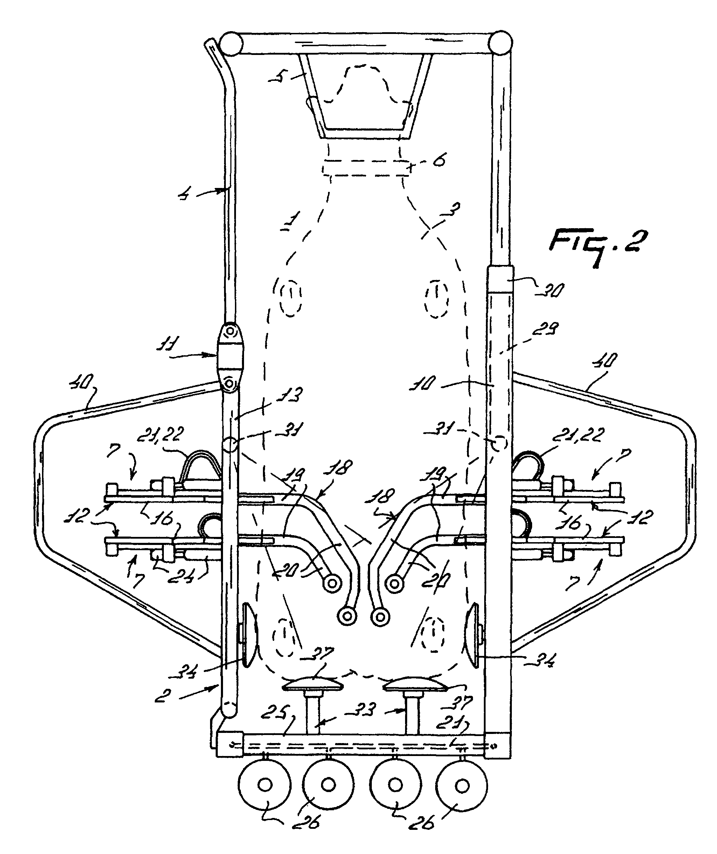

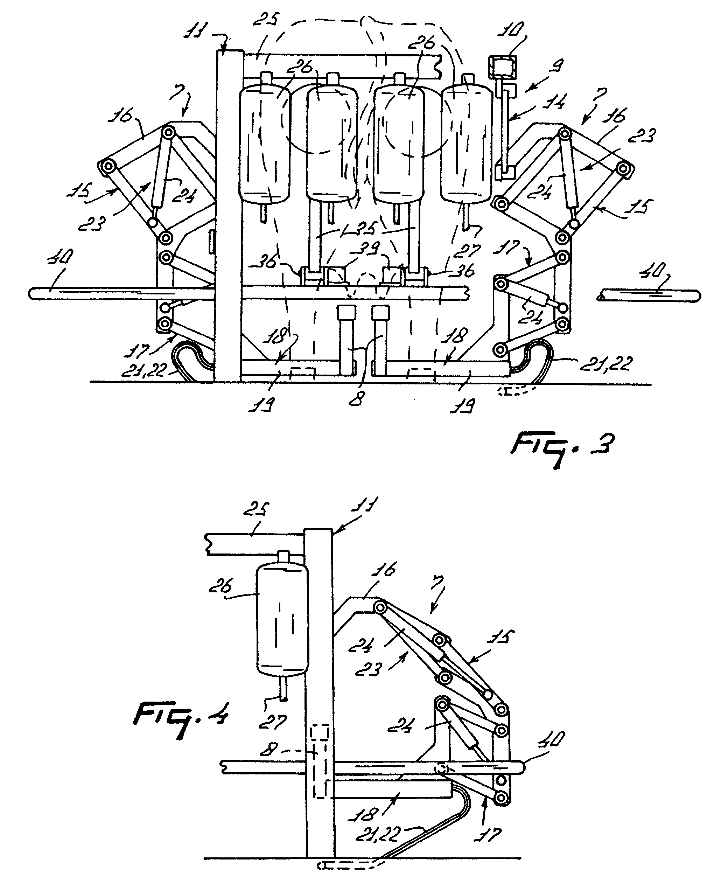

Figure 1 is a side view of a milk box 1, which is provided near one longitudinal side with an entrance door 2, via which the animal 3 can enter the milk box 1, as well as an exit door 4, via which the animal 3 can leave the milk box 1. At the front side of the milk box 1 there is additionally disposed a feed trough 5 in which fodder, such as concentrate, can be supplied to the animal 3 by means of a (non-shown) concentrate metering system. The entrance door 2 and the exit door 4 can be operated automatically by a (non-shown) computer. The animal 3 further wears a collar 6 to which there is fitted a transponder cooperating with a (non-shown) animal identification system and by means of which the animal which is present in the milk box can be identified. The milk box 1 is further provided with a milking robot 7 for automatically connecting teat cups 8 to the teats of the animal 3 to be milked respectively disconnecting same therefrom. The milking robot 7 comprises two robot arms 9 which are fitted near a longitudinal side to an upper beam 10 of a frame 11 of the milk box 1 (Figure 1). The milking robot 7 further comprises two other robot arms 12 which are fitted to an upper beam 13 of the exit door 4. Each of the robot arms 9, 12 comprises a first parallelogram construction 14 which is mounted to the relevant upper beam 10, 13. The first parallelogram construction 14 is located in a plane extending in the longitudinal direction of the milk box 1 (Figure 2). Near the other end than the one to which the first parallelogram construction 14 is fastened to the upper beam 10, 13, a second parallelogram construction 15 is disposed by means of a lug 16 (Figure 3). At the other side than the one where the lug 16 is fitted to the second parallelogram construction 15, a third parallelogram construction 17 is fitted to the second parallelogram construction 15. The second parallelogram construction 15 and the third parallelogram construction 17 are located in a plane enclosing an angle of approximately 90° with the plane in which the first parallelogram construction 14 is located. To the third parallelogram construction 17 there is fitted a teat cup carrier 18 carrying at its end the teat cup 8. The teat cup carrier 18 comprises a first portion 19 which is located in the same plane as the second and third parallelogram constructions 15, 17, and a second portion 20 which is contiguous to the first portion 19 and extends obliquely rearwards and towards the centre of the milk box 1. The first portion 19 and the second portion 20 of the teat cup carrier 18 enclose an angle of approximately 45° with each other (Figure 1). The foremost teat cup carriers 18 additionally comprise a third portion 42 which is contiguous to the second portion 20, which third portion 42 extends in the longitudinal direction of the milk box 1 and passes to beyond the rearmost teat cups 8.

The first, second and third portions 19, 20 and 42 of the teat cup carrier 18 are hollow. In the cavities of the teat cup carrier 18 there are disposed a milk tube 21 and a pulsation tube 22.

The first, second and third parallelogram constructions 14, 15 and 17 are each provided with operating means 23 for controlling said parallelogram constructions. With the aid of the operating means 23 the teat cup carrier 18 can be moved both in a plane in the longitudinal direction of the milk box 1 and in a plane that is approximately perpendicular thereto. In the present embodiment, the operating means 23 comprise servo-pneumatic cylinders 24. These servo-pneumatic cylinders 24 are capable of being activated by means of a computer and always give a feedback signal regarding the position assumed by the piston of the cylinder. In this manner it is always possible to check accurately how the teat cups 8 are positioned relative to the milk box 1. It will be obvious that, in order to obtain the same result, instead of servo-pneumatic cylinders there may also be used servo-hydraulic cylinders or so-called stepper motors. The parallelogram constructions are arranged as shown in the figures.

The robot arms 9 are further provided with overload means which prevent a robot arm 9 from being damaged when the latter is overloaded, e.g. because of the fact that the animal 3 puts a leg on the robot arm 9. In the present embodiment, the overload means comprise one or more (non-shown) adjustable overpressure valves in the pneumatic line of the servo-pneumatic cylinders 24. It is further also possible to apply, instead of an overload valve, pressure sensors which are disposed on both sides of the piston of the cylinder and which, when a specific pressure has been exceeded at one side, supply a signal, whereafter the cylinder is energized in order that the pressure at that side decreases to below the threshold value.

At the rear side of the milk box 1, four milk collecting elements 26 are fitted to a crossbeam 25 of the frame 11. Each of the milk collecting elements 26 comprises near its upper end a connection for the milk tube 21 of a relevant teat cup 8. The milk collecting elements 26 are provided at their lower sides with a discharge line 27 which is in contact with (non-shown) switch means for discharging milk to different storage tanks. In the present embodiment, the milk collecting elements 26 are designed as milk glasses. In the milk collecting elements 26 there are provided (non-shown) milk quality sensors for establishing the milk quality in the relevant milk collecting element 26. The milk quality sensors comprise conductivity sensors as well as sensors for determining the fat and protein content and the germ count of the milk. On the basis of threshold values recorded in the (non-shown) computer, it is possible to determine with the aid of the switch means in which tank the milk of a relevant milk collecting element 26 is stored. In this manner it is possible to determine per udder quarter to which tank the milk yielded is discharged.

The implement is furthermore provided with detectors 28 for determining the position of the teats of an animal to be milked. The detectors 28 are disposed on both longitudinal sides of the milk box 1. One detector 28 is connected with the entrance door 2 of the milk box, the arrangement being such that when the animal 3 enters the milk box 1, this detector does not form an obstacle. The other detector 28 is connected with a stand 30 of the frame 11 by means of a horizontal beam 29. Each of the detectors 28 comprises a laser 31 which is pivoted in a recoprocating manner about an approximately vertical axis by means of a stepper motor 32.

The implement for automatically milking animals further comprises animal-following means 33 with the aid of which the position of the animal 3, or at least a part of the animal 3, relative to the milk box can be determined and, on the basis of this position, using a (non-shown) computer, both during and after connection of the teat cups 8 to the teats of the animal 3 to be milked, the operating means 23 of the robot arms 9 can be post-controlled in order that the teat cups 8, during moving of the animal 3 in the milk box 1, continue to follow the movements of the animal 3. As shown in Figure 1, the animal-following means 33 comprise four mechanical sensors 34 of which one is located against each flank of the animal 3 when the latter is present in the milk box 1 while the two other ones push against its rear side when the animal is present in the milk box 1. As shown in Figure 1, the mechanical sensors 34 comprise a hingeable arm construction 35 whose lower side is connected with the frame 11 of the milk box 1 so as to be hingeable about a horizontal axis 36. At the other end of the hingeable arm construction 35 there is disposed a stop 37 which is pivotable about a further horizontal axis 38. The stop 37 is washer-shaped.

A registration means 39 is connected with the horizontal axis 36 of the hingeable arm construction 35, which registration means 39 establishes the angle rotation of the horizontal axis 36 and converts it into an electronic signal which is supplied to a (non-shown) computer and which can be converted into a control signal for the operating means 23 of the parallelogram constructions. In the present embodiment, the registration means 39 comprise stepper motors. Instead of stepper motors, e.g. potentiometers may be used as well. In the present embodiment, the stepper motor 39 is computer-controlled thus making it possible to pivot the hingeable arm constructions 35 away, so that they do not form an obstacle for the animal when the latter enters the milk box 1. After the animal has entered the milk box 1, which can be established by the animal identification system, the stepper motors 39 are energized, so that the stops 37 will be positioned against the animal by a predetermined and adjustable force. The light pressure exerted on the animal under the influence of the stepper motors 39 ensures that the stops 37 remain in contact with the animal's body, so that each movement of the animal 3 in the milk box 1 can be followed.

As shown in Figure 2, at both longitudinal sides of the milk box 1 there are disposed U-shaped protective brackets 40 for shielding the robot arms 9 and 12. In their inoperative position, the teat cups 8 can be brought to outside the milk box 1 (Figure 4).

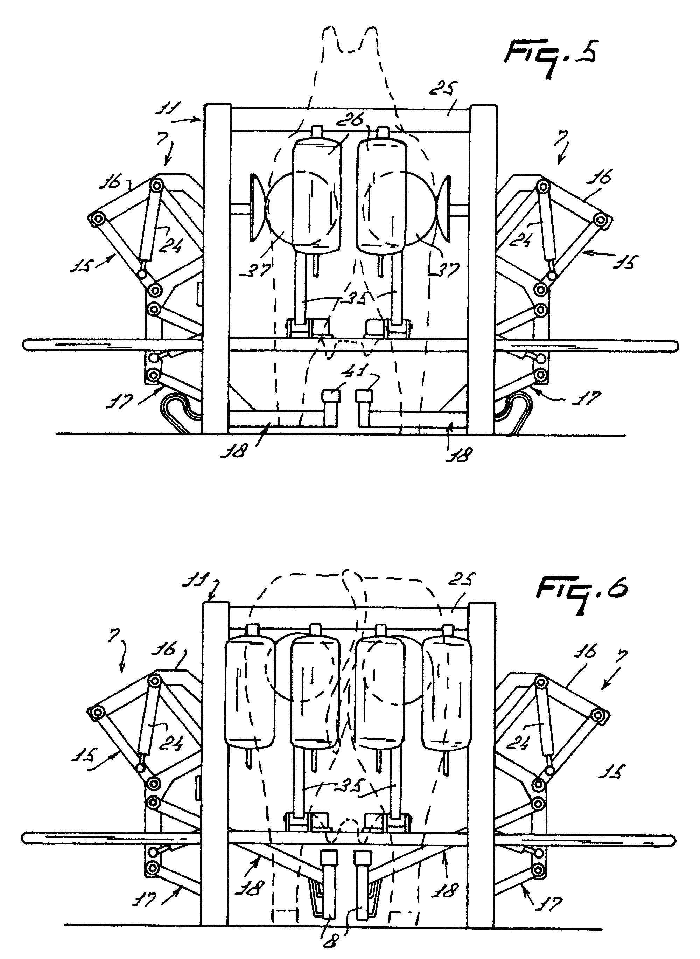

Figure 5 shows a second embodiment according to the invention comprising the same elements as the preceding embodiment but in which the milking robot is particularly suitable for milking small animals, such as sheep and goats, or other animals, such as elks, etc. At the end of the teat cup carriers 18 two relatively short teat cups 41 are disposed. The teat cups 41 have a length of approximately 12 cm. However, it will be obvious that the length of the teat cups depends on the kind of animals to be milked.

Figure 6 shows a third embodiment according to the invention, which also comprises the same elements as the first embodiment, but in which the teat cup carriers 18 are fastened to the third parallelogram construction 17 at an angle of approximately 30° obliquely downwards. Furthermore the teat cups 8 are fitted near their upper ends to the teat cup carriers 18. Due to the fact that the teat cup carriers 18 extend obliquely downwards, at an angle which may also be different from 30°, there is created relatively much freedom on the bottom under the carriers 18, so that it will be more difficult for the animal to kick on or against the teat cup carriers 18.

The implement according to the invention functions as follows and has the following advantages:
In the implement according to the invention the cow has much freedom of movement, because parallelogram constructions are fastened to the milking robot arms and the parallelogram constructions including the teat cups are operated by the control mechanism in such a manner that the teat cups follow the movements of the cow both during connection and during milking of the cow.
The teat cups are connected to the teats by means of the parallelogram construction, more in particular in such a manner that the teat cups remain at the same level during milking.
Consequently, the control of the parallelogram construction is continuously operative during milking, when the animal is forced to stay in the milk box.
When an animal puts a leg on a teat cup and the pressure in the operating cylinders of the parallelogram construction exceeds a specific, possibly adjustable threshold value, an overpressure valve is put into operation causing the parallelogram construction to give way, so that the milking robot arm can be pushed until the bottom without being damaged.
As soon as the cow takes off her leg from the teat cup, the teat cup is reconnected by means of the control mechanism.
In a few seconds the teat cup is moved automatically from the inoperative position into the milking position and more particularly in such a manner that the lower side of the teat cup moves approximately 15 mm above the bottom.
These 15 mm (to 30 mm) can be achieved by recording said data in a computer program.
The desired position of the teat cup can be adjusted with the aid of three parallelogram constructions (or three quadrangular bar mechanisms) moving the teat cup in the longitudinal, transverse and vertical direction of the milk box.
By means of the laser the position of the teats is determined. On the basis of this information, the hingeable constructions are post-controlled so that the teat cups are connected to the teats of an animal to be milked.
With the aid of the cow-following means the movements of the cow in the longitudinal and/or transverse direction of the milk box are registered. On the basis thereof the teat cups are post-controlled by means of the parallelogram construction.
The operating means of the milking robot are continuously operative both during connection and during milking and disconnection.
When the cow moves during connection of the teat cups and milking, the teat cups follow the cow's movements immediately.
If a cow kicks off a teat cup, the teat cup is moved automatically into the cleaning position for being cleaned, whereafter the teat cup is reconnected to the teat of the animal.
The laser has the advantage that the information regarding the teat position can be collected at a high speed and a great rate.
A further advantage of the implement according to the invention is that the four teat cups can be connected collectively in one movement to the teats of an animal to be milked.

## Claims

1. An implement for automatically milking animals, such as cows, which implement comprises a milk box (1) and a milking robot (7), the milking robot (7) is provided with a control mechanism for connecting teat cups (8; 41) to the teats of an animal to be milked, while the control mechanism is designed such that during connection of the teat cups (8; 41) to the teats, said teat cups (8; 41) move along with an animal to be milked, the milking robot comprises at least one robot arm (9) which is provided with a first hingeable construction, such as a quadrangular hingeable construction or a parallelogram construction (14) which is located in a first plane extending approximately in the longitudinal direction of the milk box (1), and a second and third hingeable construction, such as a quadrangular hingeable construction or a parallelogram construction (15; 17), which are connected with the first hingeable construction (14), **characterized in that** the second and third hingeable construction are located in the same second plane enclosing an angle with the first plane.

2. An implement as claimed in claim 1, **characterized in that** the first plane, in which the first hingeable construction (14) is located, encloses an angle of approximately 90° with the second plane, in which the second and third hingeable constructions (15; 17) are located.

3. An implement as claimed in claim 2, **characterized in that** to the third hingeable construction (17) there is fitted a teat cup carrier (18) bearing at its end a teat cup (8; 41).

4. An implement as claimed in claim 3, **characterized in that** the teat cup carrier (18) comprises a first portion (19) extending approximately transversely to the longitudinal direction of the milk box (1) and a second portion (20) which is contiguous to the first one (19) and extends obliquely rearwards and inwards.

5. An implement as claimed in claim 4, **characterized in that** the first and second portions (19; 20) of the teat cup carrier (18) enclose an angle of approximately 45° with each other.

6. An implement as claimed in any one of claims 3 to 5, **characterized in that** the teat cup carrier (18) is hollow and the milk tube and/or the pulsation tube (21; 22) of the relevant teat cup (8; 41) are/is located in the cavities of the teat cup carrier (18).

7. An implement as claimed in any one of the preceding claims, **characterized in that** the hingeable constructions (14; 15; 17) are provided with computer-controlled operating means (23).

8. An implement as claimed in claim 7, **characterized in that** the computer-controlled operating means (23) comprise a stepper motor and/or a servo-pneumatic or hydraulic cylinder (24).

9. An implement as claimed in any one of the preceding claims, **characterized in that** the teat cup carrier (18) is fitted to the third hingeable construction (17) so as to extend obliquely downwards.

10. An implement as claimed in any one of the preceding claims, **characterized in that** the teat cups (41) have a length of approximately 12 cm.

11. An implement as claimed in any one of the preceding claims, **characterized in that** near each longitudinal side of the milk box (1) two robot arms (9) are arranged one behind the other.

12. An implement as claimed in any one of the preceding claims, **characterized in that** the implement comprises a detector (28), such as a laser (31), for determining the position of the teats of an animal to be milked.

13. An implement as claimed in claim 12, **characterized in that** on both sides of the milk box (1) there is disposed a detector (28).

14. An implement as claimed in claim 12 or 13, **characterized in that** the detector (28) is fitted to the frame (11) of the milk box (1).

15. An implement as claimed in any one of the preceding claims, **characterized in that** the implement comprises animal-following means (33) with the aid of which the position of the animal (3), or at least a part of the animal (3), relative to the milk box can be determined, while, on the basis of this position, using a computer, both during and after connection of the teat cups (8; 41) to the teats, the hingeable constructions (14; 15; 17) are post-controlled in order that the teat cups (8; 41) continue to follow the movements of the animal (3) in the milk box (1).

16. An implement as claimed in claim 15, **characterized in that** the animal-following means (33) comprise mechanical sensors (34) pushing against the flanks of the animal (3) and against the rear side of the animal (3) when the latter is present in the milk box (1).

17. An implement as claimed in claim 16, **characterized in that**, when the animal (3) is present in the milk box (1), one mechanical sensor (34) is located at each flank of the animal (3) and two mechanical sensors (34) are located against its rear side.

18. An implement as claimed in claim 16 or 17, **characterized in that** the mechanical sensors (34) comprise a hingeable arm construction (35) which is provided at its end with a stop (37) that is rotatably disposed about an axis (38), which stop (37) rests against the animal (3) when the latter is present in the milk box (1).

19. An implement as claimed in any one of claims 15 to 18, **characterized in that** the animal-following means (33) comprise registration means (39) converting a change in position of the animal-following means (33) into an electronic signal that can be used to post-control the hingeable constructions (14; 15; 17).

20. An implement as claimed in claim 19, **characterized in that** the registration means (39) are connected with a hinge axis (36) of the mechanical sensors (34).

21. An implement as claimed in claim 19 or 20, **characterized in that** the registration means (39) comprise a stepper motor (39).

22. An implement as claimed in claim 21, **characterized in that** the stepper motor (39) is computer-controlled.

23. An implement as claimed in any one of the preceding claims, **characterized in that** the implement comprises four teat cups (8; 41) and that each of the teat cups (8; 41) is connected with a milk collecting element (26) for temporary collection of the milk yielded by the relevant teat cup (8; 41).

24. An implement as claimed in claim 23, **characterized in that** the milk collecting elements (26) comprise milk quality sensors, such as conductivity sensors, sensors for determining the fat-protein-content, etc.

25. An implement as claimed in claim 23 or 24, **characterized in that** the milk collecting elements (26) are disposed near the rear side of the milk box (1).

26. An implement as claimed in any one of the preceding claims, **characterized in that** the robot arms (9) are provided with overload means for the purpose of preventing a robot arm (9) from being damaged when the latter is overloaded, e.g. because of the fact that an animal puts a leg on the robot arm (9).

27. An implement as claimed in claim 26, **characterized in that** the overload means comprise an adjustable overpressure valve which is included in the hydraulic or pneumatic circuit of the operating means (23).

## Patentansprüche

1. Vorrichtung zum automatischen Melken von Tieren, wie z. B. Kühen, wobei die Vorrichtung eine Melkbox (1) und einen Melkroboter (7) umfaßt, wobei der Melkroboter (7) mit einer Steuerung zum Anschließen von Zitzenbechern (8; 41) an die Zitzen eines zu melkenden Tieres versehen ist, wobei die Steuerung derart ausgebildet ist, daß sich die Zitzenbecher (8; 41) während des Anschlusses der Zitzenbecher (8; 41) an die Zitzen mit einem zu melkenden Tier mitbewegen, wobei der Melkroboter mindestens einen Roboterarm (9) umfaßt, der mit einer ersten Schwenkvorrichtung, wie z. B. einer Viergelenk-Schwenkvorrichtung oder einer Parallelogrammführung (14), versehen ist, die in einer ersten Ebene angeordnet ist, die sich annähernd in Längsrichtung der Melkbox (1) erstreckt, sowie mit einer zweiten und einer dritten Schwenkvorrichtung, wie z. B. einer Viergelenk-Schwenkvorrichtung oder einer Parallelogrammführung (15; 17), die mit der ersten Schwenkvorrichtung (14) verbunden sind,
**dadurch gekennzeichnet, daß** die zweite und die dritte Schwenkvorrichtung in der gleichen zweiten Ebene angeordnet sind, die mit der ersten Ebene einen Winkel bildet.

2. Vorrichtung nach Anspruch 1,
**dadurch gekennzeichnet, daß** die erste Ebene, in der die erste Schwenkvorrichtung (14) angeordnet ist, einen Winkel von etwa 90° mit der zweiten Ebene bildet, in der die zweite und die dritte Schwenkvorrichtung (15; 17) angeordnet sind.

3. Vorrichtung nach Anspruch 2,
**dadurch gekennzeichnet, daß** an der dritten Schwenkvorrichtung (17) ein Zitzenbecherhalter (18) angeordnet ist, der an seinem Ende einen Zitzenbecher (8; 41) trägt.

4. Vorrichtung nach Anspruch 3,
**dadurch gekennzeichnet, daß** der Zitzenbecherhalter (18) einen ersten Teil (19) umfaßt, der sich annähernd quer zur Längsrichtung der Melkbox (1) erstreckt, sowie einen zweiten Teil (20), der an den ersten Teil (19) angrenzt und sich schräg nach hinten und innen erstreckt.

5. Vorrichtung nach Anspruch 4,
**dadurch gekennzeichnet, daß** der erste und der zweite Teil (19; 20) des Zitzenbecherhalters (18) miteinander einen Winkel von etwa 45° bilden.

6. Vorrichtung nach einem der Ansprüche 3 bis 5,
**dadurch gekennzeichnet, daß** der Zitzenbecherhalter (18) hohl ausgebildet ist und die Milchleitung und/oder die Pulsierleitung (21; 22) des entsprechenden Zitzenbechers (8; 41) in den Hohlräumen des Zitzenbecherhalters (18) angeordnet sind/ist.

7. Vorrichtung nach einem der vorhergehenden Ansprüche, **dadurch gekennzeichnet, daß** die Schwenkvorrichtungen (14; 15; 17) mit computergesteuerten Betätigungsvorrichtungen (23) versehen sind.

8. Vorrichtung nach Anspruch 7,
**dadurch gekennzeichnet, daß** die computergesteuerten Betätigungsvorrichtungen (23) einen Schrittmotor und/oder einen servopneumatischen oder hydraulischen Zylinder (24) umfassen.

9. Vorrichtung nach einem der vorhergehenden Ansprüche, **dadurch gekennzeichnet, daß** der Zitzenbecherhalter (18) an der dritten Schwenkvorrichtung (17) derart befestigt ist, daß er sich schräg nach unten erstreckt.

10. Vorrichtung nach einem der vorhergehenden Ansprüche,
**dadurch gekennzeichnet, daß** die Zitzenbecher (41) eine Länge von etwa 12 cm aufweisen.

11. Vorrichtung nach einem der vorhergehenden Ansprüche,
**dadurch gekennzeichnet, daß** nahe jeder Längsseite der Melkbox (1) zwei Roboterarme (9) hintereinander angeordnet sind.

12. Vorrichtung nach einem der vorhergehenden Ansprüche,
**dadurch gekennzeichnet, daß** die Vorrichtung einen Detektor (28), wie z. B. einen Laser (31), umfaßt, um die Position der Zitzen eines zu melkenden Tieres zu ermitteln.

13. Vorrichtung nach Anspruch 12,
**dadurch gekennzeichnet, daß** auf beiden Seiten der Melkbox (1) ein Detektor (28) angeordnet ist.

14. Vorrichtung nach Anspruch 12 oder 13,
**dadurch gekennzeichnet, daß** der Detektor (28) an dem Rahmen (11) der Melkbox (1) angebracht ist.

15. Vorrichtung nach einem der vorhergehenden Ansprüche,
**dadurch gekennzeichnet, daß** die Vorrichtung Tierfolgevorrichtungen (33) umfaßt, mit deren Hilfe die Position des Tieres (3) oder zumindest eines Teiles des Tieres (3) relativ zu der Melkbox ermittelt werden kann, wobei auf der Basis dieser Position die Schwenkvorrichtungen (14; 15; 17) sowohl während als auch nach dem Anschluß der Zitzenbecher (8; 41) nachgelenkt werden, damit die Zitzenbecher (8; 41) den Bewegungen des Tieres (3) in der Melkbox (1) weiterhin folgen.

16. Vorrichtung nach Anspruch 15,
**dadurch gekennzeichnet, daß** die Tierfolgevorrichtungen (33) mechanische Sensoren (34) umfassen, die gegen die Flanken des Tieres (3) und gegen die Rückseite des Tieres (3) drücken, wenn dieses sich in der Melkbox (1) befindet.

17. Vorrichtung nach Anspruch 16,
**dadurch gekennzeichnet, daß** ein mechanischer Sensor (34) an jeder Flanke des Tieres (3) und zwei mechanische Sensoren (34) an seiner Rückseite angeordnet sind, wenn sich das Tier (3) in der Melkbox (1) befindet.

18. Vorrichtung nach Anspruch 16 oder 17,
**dadurch gekennzeichnet, daß** die mechanischen Sensoren (34) eine Schwenkarmvorrichtung (35) umfassen, die an ihrem Ende mit einem Anschlag (37) versehen ist, der um eine Achse (38) drehbar ist, wobei der Anschlag (37) gegen das Tier (3) gedrückt bleibt, wenn sich dieses in der Melkbox (1) aufhält.

19. Vorrichtung nach einem der Ansprüche 15 bis 18,
**dadurch gekennzeichnet, daß** die Tierfolgevorrichtungen (33) Registriervorrichtungen (39) umfassen, die eine Veränderung der Position der Tierfolgevorrichtungen (33) in ein elektronisches Signal umwandeln, das zum Nachlenken der Schwenkvorrichtungen (14; 15; 17) verwendet werden kann.

20. Vorrichtung nach Anspruch 19,
**dadurch gekennzeichnet, daß** die Registriervorrichtungen (39) mit einer Schwenkachse (36) der mechanischen Sensoren (34) verbunden sind.

21. Vorrichtung nach Anspruch 19 oder 20,
**dadurch gekennzeichnet, daß** die Registriervorrichtungen (39) einen Schrittmotor (39) umfassen.

22. Vorrichtung nach Anspruch 21,
**dadurch gekennzeichnet, daß** der Schrittmotor (39) computergesteuert ist.

23. Vorrichtung nach einem der vorhergehenden Ansprüche,
**dadurch gekennzeichnet, daß** die Vorrichtung vier Zitzenbecher (8; 41) umfaßt, und daß jeder der Zitzenbecher (8; 41) mit einem Milchaufnahmeelement (26) zur vorübergehenden Aufnahme der von dem entsprechenden Zitzenbecher (8; 41) gewonnenen Milch verbunden ist.

24. Vorrichtung nach Anspruch 23,
**dadurch gekennzeichnet, daß** die Milchaufnahmeelemente (26) Milchqualitätssensoren, wie z. B. Leitfähigkeitssensoren, Sensoren zur Ermittlung des Fett-Protein-Gehaltes usw., umfassen.

25. Vorrichtung nach Anspruch 23 oder 24,
**dadurch gekennzeichnet, daß** die Milchaufnahmeelemente (26) nahe der Rückseite der Melkbox (1) angeordnet sind.

26. Vorrichtung nach einem der vorhergehenden Ansprüche,
**dadurch gekennzeichnet, daß** die Roboterarme (9) mit Überlastungsschutzvorrichtungen versehen sind, um eine Beschädigung eines Roboterarmes (9) zu verhindern, wenn dieser überlastet wird, beispielsweise weil ein Tier ein Bein auf den Roboterarm (9) stellt.

27. Vorrichtung nach Anspruch 26,
**dadurch gekennzeichnet, daß** die Überlastungsschutzvorrichtungen ein verstellbares Überdruckventil umfassen, das in dem hydraulischen oder pneumatischen Schaltkreis der Betätigungsvorrichtung (23) angeordnet ist.

## Revendications

1. Dispositif de traite automatique d'animaux, tels que les vaches, ledit dispositif comprenant un box de traite (1) et un robot de traite (7), ledit robot de traite (7) étant doté d'un mécanisme de contrôle pour raccorder des gobelets trayeurs (8, 41) aux trayons d'un animal qui doit être trait, alors que le mécanisme de contrôle est conçu de manière à ce qu'au cours du raccordement des gobelets trayeurs (8, 41) aux trayons, lesdits gobelets trayeurs (8, 41) se déplacent avec l'animal qui doit être trait, le robot de traite comprend au moins un bras de robot (9) qui comporte une première structure pivotante, telle qu'une structure pivotante quadrangulaire ou une structure en parallélogramme (14) qui est placée dans un premier plan qui s'étend approximativement dans le sens longitudinal du box de traite (1), et une seconde et une troisième structures pivotantes, telles qu'une structure pivotante quadrangulaire ou une structure en parallélogramme (15, 17), qui sont raccordées à la première structure pivotante (14), **caractérisé en ce que** la seconde et la troisième structures pivotantes sont situées dans le même second plan qui comporte un angle avec le premier plan.

2. Dispositif selon la revendication 1, **caractérisé en ce que** ledit premier plan, dans lequel la première structure pivotante (14) est située, comporte un angle d'environ 90° par rapport au second plan, dans lequel la seconde et la troisième structures pivotantes (15, 17) sont situées.

3. Dispositif selon la revendication 2, **caractérisé en ce que** sur la troisième structure pivotante (17) est fixé un support de gobelet trayeur (18) qui comporte à son extrémité un gobelet trayeur (8, 41).

4. Dispositif selon la revendication 3, **caractérisé en ce que** le support de gobelet trayeur (18) comprend une première partie (19) qui s'étend approximativement transversalement au sens longitudinal du box de traite (1) et une seconde partie (20) qui est contiguë à la première (19) et s'étend obliquement vers l'arrière et vers l'intérieur.

5. Dispositif selon la revendication 4, **caractérisé en ce que** la première et la seconde parties (19, 20) du support du gobelet trayeur (18) comportent un angle d'environ 45° l'une par rapport à l'autre.

6. Dispositif selon l'une quelconque des revendications 3 à 5, **caractérisé en ce que** le support de gobelet trayeur (18) est creux et le tuyau de traite et/ou le tuyau de pulsation (21, 22) du gobelet trayeur correspondant (8, 41) est/sont placé(s) dans les cavités du support du gobelet trayeur (18).

7. Dispositif selon l'une quelconque des revendications qui précèdent, **caractérisé en ce que** les structures pivotantes (14, 15, 17) sont dotées d'organes de commande contrôlés par ordinateur (23).

8. Dispositif selon la revendication 7, **caractérisé en ce que** lesdits organes de commande contrôlés par ordinateur (23) comprennent un moteur pas-à-pas et/ou un cylindre servo-pneumatique ou hydraulique (24).

9. Dispositif selon l'une quelconque des revendications qui précèdent, **caractérisé en ce que** le support de gobelet trayeur (18) est monté sur la troisième structure pivotante (17) de façon à s'étendre obliquement vers le bas.

10. Dispositif selon l'une quelconque des revendications qui précédent, **caractérisé en ce que** les gobelets trayeurs (41) ont une longueur d'environ 12 cm.

11. Dispositif selon l'une quelconque des revendications qui précèdent, **caractérisé en ce que** près de chaque côté longitudinal du box de traite (1), deux bras de robot (9) sont placés l'un derrière l'autre.

12. Dispositif selon l'une quelconque des revendications qui précèdent, **caractérisé en ce que** ledit dispositif comprend un détecteur (28), tel qu'un laser (31), pour déterminer la position des trayons d'un animal qui doit être trait.

13. Dispositif selon la revendication 12, **caractérisé en ce que** des deux côtés du box de traite (1) se trouve un détecteur (28).

14. Dispositif selon les revendications 12 ou 13, **caractérisé en ce que** le détecteur (28) est fixé au montant (11) du box de traite (1).

15. Dispositif selon l'une quelconque des revendications qui précèdent, **caractérisé en ce que** ledit dispositif comprend des moyens qui permettent de suivre l'animal (33), à l'aide desquels la position de l'animal (3), ou du moins une partie de l'animal (3), par rapport au box de traite peut être déterminée, alors que, selon cette position, en utilisant un ordinateur, à la fois pendant et après le raccordement des gobelets trayeurs (8, 41) aux trayons, les structures pivotantes (14, 15, 17) sont post-contrôlées de façon à ce que les gobelets trayeurs (8, 41) continuent de suivre les mouvements de l'animal (3) dans le box de traite (1).

16. Dispositif selon la revendication 15, **caractérisé en ce que** les moyens qui permettent de suivre l'animal (33) comprennent des détecteurs mécaniques (34) qui poussent contre les flancs de l'animal (3) et contre le train postérieur de l'animal (3) quand ce dernier est présent dans le box de traite (1).

17. Dispositif selon la revendication 16, **caractérisé en ce que**, quand l'animal (3) est présent dans le box de traite (1), un détecteur mécanique (34) est placé sur chaque flanc de l'animal (3) et deux détecteurs mécaniques (34) sont placés contre son train postérieur.

18. Dispositif selon les revendications 16 ou 17, **caractérisé en ce que** les détecteurs mécaniques (34) comprennent une structure de bras pivotant (35) qui est pourvue à son extrémité d'une butée (37) qui peut pivoter autour d'un axe (38), ladite butée (37) reposant contre l'animal (3) quand ce dernier est présent dans le box de traite (1).

19. Dispositif selon l'une quelconque des revendications 15 à 18, **caractérisé en ce que** les moyens qui permettent de suivre l'animal (33) comprennent des moyens de repérage (39) qui convertissent un changement de position des moyens qui permettent de suivre l'animal (33) en signal électronique qui peut être utilisé pour post-contrôler les structures pivotantes (14, 15, 17).

20. Dispositif selon la revendication 19, **caractérisé en ce que** les moyens de repérage (39) sont raccordés à un axe pivotant (36) des détecteurs mécaniques (34).

21. Dispositif selon les revendications 19 ou 20, **caractérisé en ce que** les moyens de repérage (39) comprennent un moteur pas-à-pas (39).

22. Dispositif selon la revendication 21, **caractérisé en ce que** le moteur pas-à-pas (39) est contrôlé par ordinateur.

23. Dispositif selon l'une quelconque des revendications qui précèdent, **caractérisé en ce que** ledit dispositif comprend quatre gobelets trayeurs (8, 41) et **en ce que** chacun des gobelets trayeurs (8, 41) est raccordé à un élément de recueil du lait (26) pour le recueil temporaire du lait récupéré par le gobelet trayeur (8, 41) correspondant.

24. Dispositif selon la revendication 23, **caractérisé en ce que** les éléments de recueil du lait (26) comprennent des détecteurs de qualité du lait, tels que des détecteurs de conductivité, des détecteurs pour déterminer le contenu en matières grasses et protéines, etc.

25. Dispositif selon les revendications 23 ou 24, **caractérisé en ce que** les éléments de recueil du lait (26) sont disposés près du côté postérieur du box de traite (1).

26. Dispositif selon l'une quelconque des revendications qui précèdent, **caractérisé en ce que** les bras du robot (9) sont dotés de dispositifs de surcharge afin d'empêcher un bras de robot (9) d'être endommagé quand ce dernier est surchargé, par exemple quand un animal appuie une patte sur le bras du robot (9).

27. Dispositif selon la revendication 26, **caractérisé en ce que** les moyens de surcharge comprennent une soupape de surpression réglable qui est comprise dans le circuit hydraulique ou pneumatique des éléments de commande (23).
